# EUROPÄISCHE PATENTSCHRIFT

(11) **EP 3 392 206 B1**
(45) Veröffentlichungstag und Bekanntmachung des Hinweises auf die Patenterteilung: **18.03.2020**
(21) Anmeldenummer: 18000173.7
(22) Anmeldetag: 20.02.2018
(51) Int. Cl.: C02F 3/12, C02F 3/22, B01D 21/24, F04F 1/20

(54) **WASSERHEBEVORRICHTUNG MIT EINER ABSCHEIDEVORRICHTUNG**
WATER RAISER WITH A SEPARATING DEVICE
DISPOSITIF D'ÉLÉVATION D'EAU DOTÉ D'UN DISPOSITIF DE SÉPARATION

(30) Priorität: 22.02.2017 DE 102017001738
(43) Veröffentlichungstag der Anmeldung: 24.10.2018
(73) Patentinhaber: KLARO GmbH, 95447 Bayreuth (DE)
(72) Erfinder: GRAF, Otto P., 79331 Teningen (DE)
(74) Vertreter: Spranger, Stephan

(56) Entgegenhaltungen:
- EP-A1- 1 582 263
- DE-A1-102012 008 928
- DE-U1- 20 105 661

## Beschreibung

Die Erfindung betrifft eine Wasserhebevorrichtung von Klarwasser aus einem Reinigungsbecken gemäß dem Oberbegriff des Anspruchs 1.

Derartige Wasserhebevorrichtungen werden z.B. in Reinigungsbecken von Kläranlagen eingesetzt, wie sie aus der Druckschrift DE 20 2012 004 597 als Belebungsanlagen im Aufstaubetrieb, die auch als SBR (Sequency Batch Reactor) bezeichnet werden und mindestens ein Vorklärbecken und ein Reaktorbecken als getrennte Reinigungsbecken aufweisen, bekannt sind. Diese Anlagen können unterschiedlich betrieben werden. So kann ein stetiger Zulauf von Abwasser über das Vorklärbecken in das Reaktorbecken stattfinden, wobei ein Wasserabzug von gereinigtem Wasser mit Hilfe der Wasserhebevorrichtung zunächst geschlossen ist. Mit einem Zulauf von Abwasser steigt der Wasserspiegel in dem Reaktorbecken an. Während der Abwasserzuführung laufen im Reaktorbecken nacheinander eine Belüftungsphase, eine Absetzphase und schließlich eine Wasserabzugsphase mittels der nun aktivierten Wasserhebevorrichtungen ab, wobei weiter Abwasser in das Reaktorbecken zuläuft. Die Beschickungsdauer entspricht der Zyklusdauer. Anstelle eines stetigen Zulaufs von Abwasser kann die Abwasserzuführung auch schubweise erfolgen. Dabei wird das Abwasser in bestimmten Zeitabständen aus dem Vorklärbecken dem Reaktorbecken zugeführt.

Die europäische Patentanmeldung EP 1 582 263 A1 beschreibt eine Drucklufthebeanlage für fließfähige Medien, bei welcher eine Rohrleitungsanordnung mit mehreren auf- und abwärts gerichteten Rohrabschnitten zum Klarwasserabzug vorgesehen ist.

Derartige Wasserhebevorrichtungen können nicht nur in Kläranlagen mit getrennten Reinigungsbecken zum Einsatz kommen sondern entsprechend auch in Kläranlagen mit einem Reinigungsbecken und/oder mit beispielsweise durch eine Trennwand unterteiltem oder unterteilten Reinigungsbecken.

In jedem Fall ist in der Wasserabzugsphase aus dem Reaktorbecken eine Wasserhebevorrichtung erforderlich, um gereinigtes Wasser, das auch Klarwasser genannt wird, aus dem Reaktorbecken abzuführen. Bei schubweiser Abwasserzuführung kann zusätzlich eine weitere Wasserhebevorrichtung in bekannter Bauweise auch vorgeklärtes Wasser aus dem Vorklärbecken in das Reaktorbecken fördern. In jedem Fall ist der Einsatz der aus der obigen Druckschrift bekannten Wasserhebevorrichtung in der Wasserabzugsphase aus dem Reaktorbecken kritisch, da über einen bisher eingesetzten Ansaugstutzen der Wasserhebevorrichtung bereits während der Belüftungsphase in SBR-Reaktoren Belebtschlamm in die Wasserhebevorrichtung gelangt und sich dort ansammelt.

Eine anfänglich hohe Verschmutzung zu Beginn der Wasserabzugsphase ist optisch deutlich wahrnehmbar und kann zur Verstopfung von Sickergruben führen. Ein auch nur anfänglich mit Belebtschlamm belastetes Wasser kann die steigenden Anforderungen an die Qualität gereinigten Abwassers nur unzureichend erfüllen. Nachgeschaltete Sickergruben, Desinfektionsstufen und Brauchwasseranlagen erfordern einen erhöhten Aufwand, um den Restanteil an Belebtschlamm, der mit jedem Zyklus anfällt, zu beseitigen.

Aus der Deutschen Offenlegungsschrift DE 10 2012 024 832 A1 ist eine Wasserhebevorrichtung von Klarwasser aus einem Reinigungsbecken bekannt. Diese bekannte Wasserhebevorrichtung weist ein U-förmiges Rohr auf, das mit seiner Basis in eine zu reinigende Flüssigkeit eines Reinigungsbeckens eintaucht und einen ersten Schenkel als Heberohr und einen zweiten Schenkel als Belüftungsrohr aufweist, wobei die Basis als verbindender Krümmer zwischen dem Heberohr und dem Belüftungsrohr ausgebildet ist, und wobei obere Enden der Schenkel aus der zu reinigenden Flüssigkeit herausragen. Ein Ansaugstutzen ist an dem Belüftungsrohr in einem unteren Wasserstandniveau in Bezug auf das zu hebenden gereinigte Klarwasser angeordnet. Mindestens ein Druckluftanschluss ist an dem Heberohr unterhalb des Wasserstandniveaus des Ansaugstutzens angeordnet. Der Ansaugstutzen ist als invertierte Siphonvorrichtung ausgebildet, und die invertierte Siphonvorrichtung weist einen invertierten ersten U- oder V-förmigen Krümmer auf, der in einen ersten Tauchrohrstutzen übergeht. Mit Hilfe der invertierte Siphonvorrichtung bildet sich eine Luftblasensperre aus, die ein Ansammeln von Belebtschlamm während einer Belüftungsphase vermindert, jedoch sammelt sich eine geringe Restmenge in dem Tauchrohrstutzen mit Ansaugöffnung, der stromaufwärts des invertierten Siphonbogenabschnitts der invertierten Siphonrichtung angeordnet ist, und trägt beim Austrag des gereinigten Wassers dazu bei, dass eine Restmenge von Belebtschlamm anfänglich mit dem gereinigten Wasser ausgetragen wird.

Es ist daher die Aufgabe der vorliegenden Erfindung, eine weiter verbesserte Wasserhebevorrichtung bereit zu stellen, welche den oben genannten Nachteil des anfänglichen Austragens einer Restmenge von Belebtschlamm überwindet und mittels konstruktiver Maßnahmen den Eintrag von Verunreinigungen beim anfänglichen Austragen von Klarwasser aus einer SBR-Kläranlage oder einer Ölabscheideanlage weiter vermindert.

Diese Aufgabe der vorliegenden Erfindung wird mit einer Wasserhebevorrichtung mit den Merkmalen des Anspruchs 1 gelöst. Vorteilhafte Weiterbildungen der Erfindung ergeben sich aus den Merkmalen der abhängigen Ansprüche.

Gemäß einer Ausführungsform der vorliegenden Erfindung weist eine Wasserhebevorrichtung für gereinigtes Wasser aus einem Reinigungsbecken ein U-förmiges Rohr auf, das mit seiner Basis in eine zu reinigende Flüssigkeit eines Reinigungsbeckens eintaucht und einen ersten Schenkel als Heberohr und einen zweiten Schenkel als Belüftungsrohr aufweist, wobei die Basis als verbindender Krümmer zwischen dem Heberohr und dem Belüftungsrohr ausgebildet ist, und wobei obere Enden der Schenkel aus der zu reinigenden Flüssigkeit herausragen. Ein Ansaugstutzen ist an dem Belüftungsrohr in einem unteren Wasserstandniveau in Bezug auf das zu hebenden gereinigte Wasser angeordnet. Mindestens ein Druckluftanschluss ist an dem Heberohr unterhalb des Wasserstandniveaus des Ansaugstutzens angeordnet. Der Ansaugstutzen geht dabei in einen ersten Tauchrohrstutzen über.

Der erste Tauchrohrstutzen wiederum geht in eine Abscheidevorrichtung über, wobei ein Umlenkrohr der Abscheidevorrichtung an ein Ende des erste Tauchrohrstutzens angeschlossen ist. Das Umlenkrohr lenkt entgegen der Ausrichtung des ersten Tauchrohrstutzens das Klarwasser bis zu einem Niveau unterhalb des Wasserstandniveaus um. Auf das Umlenkrohr ist ein zweiter Krümmer, an den sich ein schräg nach unten ausgerichteter zweiter Tauchrohrstutzen anschließt, der in eine vertikal ausgerichtete Ansaugöffnung übergeht, aufgesetzt.

Die Ergebnisse in Bezug auf das nachteilige anfängliche Austragen einer Restmenge von Belebtschlamm sind erfindungsgemäß derart gut, dass praktisch keinerlei Restmengen von Belebtschlamm die erfindungsgemäße Abscheidevorrichtung überwindet.

Eine mögliche Ursache kann in der Schrägstellung des Tauchrohrstutzens mit vertikal ausgerichteter Ansaugöffnung gesehen werden, da die Strömungsgeschwindigkeit über dem Querschnitt der vertikal ausgerichteten Ansaugöffnung von einem oberen Bereich zu einem unteren Bereich differiert und das Ausscheiden von Resten des Belebtschlamms im unteren Bereich des Querschnitts der vertikal ausgerichteten Ansaugöffnung des schräg nach unten ausgerichteten Tauchrohrstutzens unterstützt, was mit einer herkömmlichen horizontal ausgerichteten Ansaugöffnung eines sich vertikal erstreckenden Tauchrohrstutzens nicht gegeben ist.

Gemäß der Erfindung ist der zweite Krümmer bevorzugt derart angeordnet, dass die Oberkannte des zweiten Krümmers unterhalb eines minimalen Wasserstandniveaus angeordnet ist. Damit ist der Vorteil verbunden, dass sichergestellt ist, dass in der Abscheidevorrichtung das Prinzip der kommunizierenden Rohre aufrecht erhalten bleibt, solange Klarwasser oberhalb des minimalen Wasserstandniveaus durch die Wasserhebevorrichtung abgehoben wird.

Weiterhin ist in einer Ausführungsform der Erfindung ein unteres Ende des ersten Tauchrohrstutzens horizontal angeordnet. Die Ansaugöffnung des schräg nach unten angeordneten zweiten Tauchrohrstutzens ist bevorzugt vertikal ausgerichtet. Diese unterschiedliche Anordnung der Ansaugöffnungen führt dazu, dass der kreisrunde, radialsymmetrische horizontale Querschnitt des ersten Tauchrohrstutzens durch die erfindungsgemäße schräge Anordnung des zweiten Tauchrohrstutzens der Abscheidevorrichtung in einen ovalen vertikal ausgerichteten Querschnitt überführt wird, was zu den äußerst vorteilhaften Wirkungen in Bezug auf ein Vermeiden von Restmengen von Belebtschlamm, die üblicherweise nachteilig in dem anfänglich ausgetragenen gereinigten Klarwasser enthalten sind, führt.

In einer praxisnahen vorteilhaften Ausführungsform weist das Umlenkrohr zwei 90° Krümmer und einen vertikalen Steigrohrabschnitt auf, an den ein zweiter Krümmer aufgesteckt ist, der mindestens einen 90°-Krümmer aufweist, und mit einem schräg nach unten ausrichtbaren Krümmer zusammenwirkt, der den schräg nach unten ausgerichteten Tauchrohrstutzen ausrichtet und trägt. Diese Ausführungsform hat den Vorteil, dass sie durch einen preiswerten Nachbausatz aus geraden und lagermäßigen Rohrkrümmerstücken realisiert werden kann.

Ferner weist eine weitere Ausführungsform der Erfindung einen nach unten ausgerichtete Tauchrohrstutzen mit einem Neigungswinkel gegenüber der Horizontalen zwischen 30° 60° auf. Dabei nimmt die Differenz zwischen den Strömungsgeschwindigkeiten im oberen Bereich und im unteren Bereich der vertikal ausgerichteten Ansaugöffnung mit steigendem Winkel zur Horizontalen zu. Ein mittlerer Wert eines Neigungswinkels liegt vorzugsweise bei 45° gegenüber der Horizontalen.

Die Abscheidevorrichtung der Wasserhebevorrichtung weist in einer Ausführungsform der Erfindung ein Umlenkrohr auf, das an einem unteren Ende eines Tauchrohrstutzens der Wasserhebevorrichtung anschließbar und entgegen der Ausrichtung des Tauchrohrstutzens der Wasserhebevorrichtung bis zu einem Niveau unterhalb eines Wasserstandniveaus umgelenkt ist. Ein Krümmer ist auf das Umlenkrohr aufgesetzt, an den sich ein schräg nach unten ausgerichteter Tauchrohrstutzen anschließt, der in eine vertikal ausgerichtete Ansaugöffnung übergeht. Mit dieser Abscheidevorrichtung wird vorteilhafter Weise erreicht, dass Reste von Belebtschlammpartikeln, die bisher im anfänglichen Klarwasserhebevorgang aus dem vertikalen Tauchrohrstutzen von der Wasserhebevorrichtung mitgehoben werden nun nahezu vollständig durch die erfindungsgemäße Abscheidevorrichtung abgeschieden werden.

Dazu weist die erfindungsgemäße Abscheidevorrichtung einen oberen Krümmer auf, der derart angeordnet ist, dass seine Oberkannte unterhalb eines minimalen Wasserstandniveaus liegt, um das Prinzip der verbundenen Rohre zu erfüllen. Dieser obere Krümmer weist in einer Ausführungsform der Erfindung einen 90° Krümmer und einen nach unten abgewinkelten Krümmer auf, der in den schräg nach unten ausgerichteten Tauchrohrstutzen der Abscheidevorrichtung übergeht.

Dabei kann der nach unten ausgerichtete Tauchrohrstutzen einen Neigungswinkel gegenüber der Horizontalen zwischen 30° und 60° aufweisen. Wodurch die Differenz der Strömungsgeschwindigkeiten zwischen dem oberen und dem unteren Querschnittsbereich der vertikal ausgerichteten Ansaugöffnung der Abscheidevorrichtung um einen begrenzten Betrag einstellbar wird, und ein mittlerer Wert bei einem Neigungswinkel gegenüber der Horizontalen von 45° des nach unten ausgerichteten Tauchrohrstutzen erreicht wird.

Weitere Vorteile, Merkmale und Ausgestaltungen der vorliegenden Erfindung werden aus der folgenden detaillierten Beschreibung einer bevorzugten Ausführungsform mit Bezug auf die Zeichnungen ersichtlich.
- Fig. 1: zeigt eine schematische Querschnittsansicht einer Wasserhebevorrichtung mit einer Abscheidevorrichtung in einem Reinigungsbecken entlang einer zweifach abgewinkelten Schnittlinie A-A der Figur 3 gemäß einer Ausführungsform der Erfindung;
- Fig. 2: zeigt eine schematische Querschnittsansicht der Abscheidevorrichtung in vergrößertem Detail entlang der zweifach abgewinkelten Schnittlinie A-A der Figur 3 gemäß der Ausführungsform der Erfindung;
- Fig. 3: zeigt eine schematische Draufsicht der Wasserhebevorrichtung mit einer Abscheidevorrichtung in einem Reinigungsbecken gemäß Figur 1.

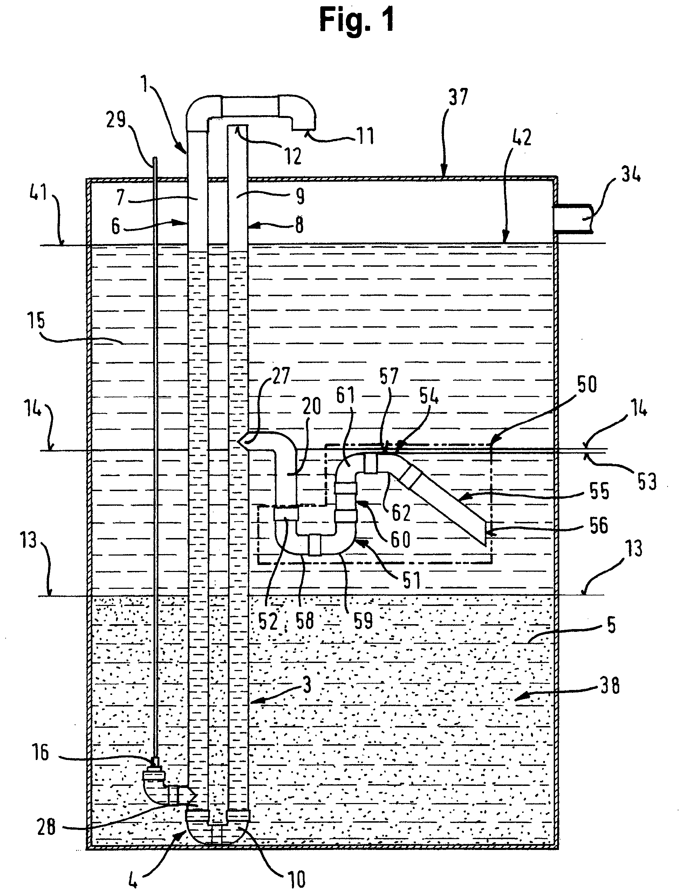

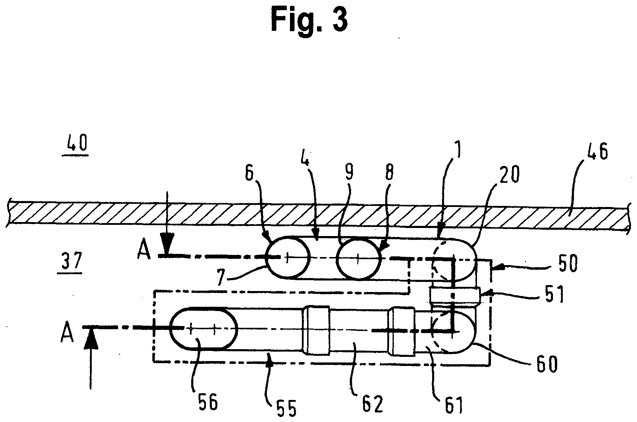

Fig. 1 zeigt eine schematische Querschnittsansicht einer Wasserhebevorrichtung 1 mit einer Abscheidevorrichtung 50 in einem Reinigungsbecken 37 entlang einer zweifach abgewinkelten Schnittlinie A-A der Figur 3 gemäß einer Ausführungsform der Erfindung. Das Reinigungsbecken 37 ist bis zu einem Überlauf 34 mit der zu reinigender Flüssigkeit 5 gefüllt. Nach einer Absetzphase haben sich im unteren Bereich des Reinigungsbeckens 37 unterhalb eines Grenzschichtniveaus 13 Feststoffpartikel und Belebtschlamm 38 abgesetzt. Darüber hat sich eine Wassersäule 42 aus gereinigtem Klarwasser 15 gebildet, die von einem Füllstandniveau 41 bis zu dem Grenzschichtniveaus 13 reicht. Die hier gezeigte Wasserhebevorrichtung 1 ist in der Lage das gereinigte Klarwasser 15 der Wassersäule 42 zwischen dem Füllstandniveau 41 und einem Wasserstandniveau 14 oberhalb des Grenzschichtniveaus 13 mittels eines Heberohres 7 über das Füllstandniveau 41 hinaus mindestens bis zu einem offenen oberen Ende 11 des Heberohres 7 zu fördem.

Dazu besteht die Wasserhebevorrichtung 1 im Prinzip aus einem U-förmigen Rohr 3, das als Heberohr 7 einen ersten Schenkel 6 aufweist, wobei ein zweiter Schenkel 8 des U-förmigen Rohres 3 als Belüftungsrohr 9 dient und eine Basis 4 des U-förmigen Rohres 3 einen Krümmer 10 aufweist, der das Heberohr 7 mit dem Belüftungsrohr 9 verbindet. Auch das Belüftungsrohr 9 ragt mit seinem oberen Ende 12 aus dem Füllstandniveau 41 heraus. Das Belüftungsrohr 9 steht mit einem Tauchrohrstutzens 20 mechanisch in Verbindung.

Um die Wasserhebevorrichtung 1 zu aktivieren und die Hebephase des Heberohres 7 zum Abziehen des gereinigten Klarwassers 15 bis zu dem Wasserstandniveau 14 durchzuführen, ist an einem unteren Ende 28 des Heberohres 7 ein Druckluftanschluss 16 oder ein Druckluftventil angeordnet. Der Druckluftanschluss 16 oder das Druckluftventil sind an eine Druckluftleitung 29 angeschlossen. Ein Druckluftventil ist in der Lage, eine Offenposition zum Aktivieren der Drucklufthebefunktion und eine Schließposition zum Beenden der Drucklufthebefunktion einzunehmen. Ein derartiges Druckluftventil kann außerhalb des Reinigungsbeckens 37 angeordnet sein, so dass sich in dem Fall die Funktion am unteren Ende des Heberohres 7 auf die Funktion eines Druckluftanschlusses reduziert.

Wird das Reinigungsbecken 37 zusätzlich oder ausschließlich als Ölabscheidebecken eingesetzt, sammeln sich in der Absetzphase Feststoffe und/oder Belebtschlamm 38 im unteren Bereich des Reinigungsbeckens 37. Gleichzeitig scheiden sich an der Oberfläche der Wassersäule 42 öl- und fetthaltige Substanzen in einer öl- und fetthaltigen Schicht ab. Diese öl- und fetthaltige Schicht kann beispielsweise durch ein zyklisches Anheben des Füllstandniveaus 41 zu dem Niveau des Überlaufs 34 aus dem Reinigungsbecken 37 abgezogen werden.

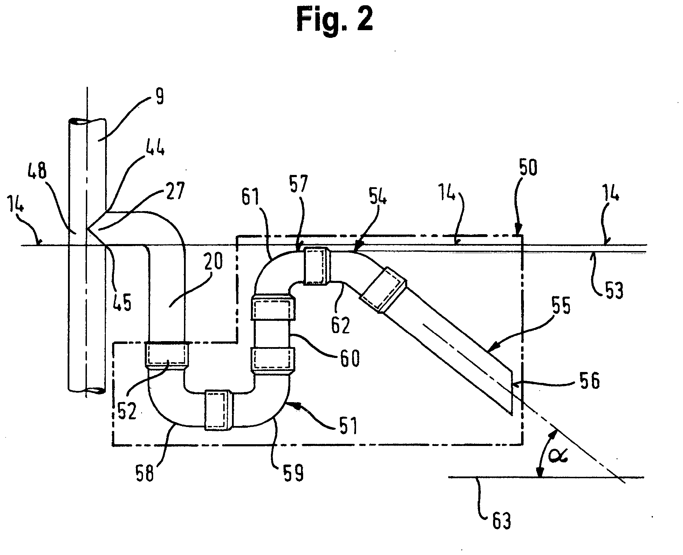

Fig. 2 zeigt eine schematische Querschnittsansicht der Abscheidevorrichtung 50 in vergrößertem Detail entlang der zweifach abgewinkelten Schnittlinie A-A der Figur 3 gemäß der Ausführungsform der Erfindung. Die Abscheidevorrichtung 50 weist ein Umlenkrohr 51 auf, das an einem bevorzugt unteren Ende 52 eines Tauchrohrstutzens 20 der Wasserhebevorrichtung 1 angeschlossen ist und entgegen der in den Figuren, insbesondere in Figur 2, beispielhaft gezeigten Ausrichtung des Tauchrohrstutzens 20 der Wasserhebevorrichtung 1 bis zu einem Niveau 53 unterhalb eines Wasserstandniveaus 14 umgelenkt ist. An einen Krümmer 54, der auf das Umlenkrohr 51 aufgesetzt ist, schließt sich ein schräg nach unten ausgerichteter Tauchrohrstutzen 55 an, der in eine vertikal ausgerichtete Ansaugöffnung 56 übergeht.

Der Krümmer 54 ist derart angeordnet, dass seine Oberkannte 57 unterhalb des minimalen Wasserstandniveaus 14 der Wasserhebevorrichtung 1 angeordnet ist und weist einen 90°-Krümmer 61 sowie einen nach unten abgewinkelten Krümmer 62 auf, der seinerseits in den schräg nach unten ausgerichteten Tauchrohrstutzen 55 übergeht.

Der nach unten ausgerichtete Tauchrohrstutzen 55 weist einen Neigungswinkel α gegenüber der Horizontalen 63 zwischen 30° und 60° auf. In der in Figur 2 gezeigten Ausführungsform weist der nach unten ausgerichtete Tauchrohrstutzen 55 einen Neigungswinkel α gegenüber der Horizontalen 63 von 45° auf.

Fig. 3 zeigt eine schematische Draufsicht der Wasserhebevorrichtung 1 mit einer Abscheidevorrichtung 50 in einem Reinigungsbecken gemäß Figur 1. Um raumsparend die Abscheidevorrichtung 50 in dem Reinigungsbecken 37 unterzubringen, ist die Abscheidevorrichtung 50 zweifach um jeweils einem 90° Winkel gegenüber der Wasserhebevorrichtung 1 die an einer Trennwand 46 zwischen dem Reinigungsbecken 37 und dem Reaktionsbecken 40 fixiert ist, abgewinkelt.

### Bezugszeichenliste

- 1: Wasserhebevorrichtung
- 3: U-förmiges Rohr
- 4: Basis
- 5: Flüssigkeit
- 6: erster Schenkel
- 7: Heberohr
- 8: zweiter Schenkel
- 9: Belüftungsrohr
- 10: Krümmer
- 11: oberes Ende
- 12: oberes Ende
- 13: Grenzschichtniveau
- 14: Wasserstandsniveau
- 15: Klarwasser
- 16: Druckluftanschluss oder Druckluftventil
- 20: erster Tauchrohrstutzen
- 27: Öffnung von 9
- 28: unteres Ende
- 29: Druckluftleitung
- 34: Überlauf
- 37: Reinigungsbecken
- 38: Belebtschlamm und Feststoffpartikel
- 40: Reaktorbecken
- 41: Füllstandsniveau
- 42: Wassersäule
- 46: Trennwand
- 50: Abscheidevorrichtung
- 51: Umlenkrohr
- 52: Ende erster Tauchrohrstutzen
- 53: Niveau
- 54: Krümmer
- 55: zweiter Tauchrohrstutzen (schräg)
- 56: Ansaugöffnung
- 57: Oberkante
- 58: 90°- Krümmer
- 59: 90°- Krümmer
- 60: Steigrohrabschnitt
- 61: 90°- Krümmer
- 62: abgewinkelter Krümmer
- 63: Horizontale

- α: Neigungswinkel zur Horizontalen

## Patentansprüche

1. Wasserhebevorrichtung aus einem Reinigungsbecken (37) mit einer Abscheidevorrichtung aufweisend:
ein U-förmiges Rohr (3), das mit seiner Basis (4) in eine zu reinigende Flüssigkeit (5) eines Reinigungsbeckens (37) eintaucht und einen ersten Schenkel (6) als Heberohr (7) und einen zweiten Schenkel (8) als Belüftungsrohr (9) aufweist, wobei die Basis (4) als verbindender Krümmer (10) zwischen dem Heberohr (7) und dem Belüftungsrohr (9) ausgebildet ist, und wobei obere Enden (11, 12) der Schenkel (6,8) aus der zu reinigenden Flüssigkeit (5) herausragen;
einen Ansaugstutzen, der an dem Belüftungsrohr (9) in einem unteren Wasserstandniveau (14) in Bezug auf das zu hebenden gereinigte Klarwasser (15) angeordnet ist, und
mindestens ein Druckluftanschluss (16), der an dem Heberohr (7) und unterhalb des Wasserstandniveaus (14) des Ansaugstutzens angeordnet ist, der in einen ersten Tauchrohrstutzen (20) übergeht,
**dadurch gekennzeichnet, dass**
der erste Tauchrohrstutzen (20) in eine Abscheidevorrichtung (50) übergeht, wobei ein Umlenkrohr (51) der Abscheidevorrichtung (50) an ein Ende (52) des ersten Tauchrohrstutzens (20) angeschlossen ist und entgegen der Ausrichtung des ersten Tauchrohrstutzens (20) bis zu einem Niveau (53) unterhalb des Wasserstandniveaus (14) umgelenkt ist und ein zweiter Krümmer (54) auf das Umlenkrohr (51) aufgesetzt ist, an den sich ein schräg nach unten ausgerichteter zweiter Tauchrohrstutzen (55) anschließt, der in eine vertikal ausgerichtete Ansaugöffnung (56) übergeht.

2. Wasserhebevorrichtung nach Anspruch 1, wobei der zweite Krümmer (54) derart angeordnet ist, dass die Oberkannte (57) des zweiten Krümmers (54) unterhalb eines minimalen Wasserstandniveaus (14) angeordnet ist.

3. Wasserhebevorrichtung nach Anspruch 1 oder Anspruch 2, wobei das Ende (52) des ersten Tauchrohrstutzens (20) als unteres Ende horizontal angeordnet ist und die Ansaugöffnung (61) des schräg nach unten angeordneten zweiten Tauchrohrstutzens (55) vertikal ausgerichtet ist.

4. Wasserhebevorrichtung nach einem der vorhergehenden Ansprüche, wobei das Umlenkrohr (54) zwei 90° Krümmer (58, 59) und einen vertikalen Steigrohrabschnitt (60) aufweist.

5. Wasserhebevorrichtung nach einem der vorhergehenden Ansprüche, wobei der zweite Krümmer (54) einen 90°- Krümmer (61) und einen nach unten abgewinkelten Krümmer (62) aufweist, der in den schräg nach unten ausgerichteten zweiten Tauchrohrstutzen (55) übergeht.

6. Wasserhebevorrichtung nach einem der Ansprüche 1 bis 5, wobei der nach unten ausgerichtete zweite Tauchrohrstutzen (55) einen Neigungswinkel (α) gegenüber der Horizontalen (63) zwischen 30° und 60° aufweist.

7. Wasserhebevorrichtung nach Anspruch 6, wobei der nach unten ausgerichtete zweite Tauchrohrstutzen (55) einen Neigungswinkel (α) gegenüber der Horizontalen (63) von 45° aufweist.

## Claims

1. Water raising facility, from a cleaning tank (37), having a separating facility, comprising:
a U-shaped pipe (3) the base (4) of which is immersed into a liquid (5) to be cleaned of a cleaning tank (37) and which comprises a first leg (6) as raising pipe (7) and a second leg (8) as ventilation pipe (9), whereby the base (4) is designed as a connecting elbow (10) between the raising pipe (7) and the ventilation pipe (9), and whereby upper ends (11, 12) of the legs (6, 8) protrude from the liquid (5) to be cleaned;
an intake socket that is arranged on the ventilation pipe (9) at a lower water level (14) with respect to the cleaned clarified water (15) to be raised, and
at least one compressed air connector (16) that is arranged on the raising pipe (7) and below the water level (14) of the intake socket that merges into a first immersion pipe socket (20),
**characterised in that**
the first immersion pipe socket (20) merges into a separating facility (50), whereby a redirecting pipe (51) of the separating facility (50) is connected to an end (52) of the first immersion pipe socket (20) and is redirected opposite to the orientation of the first immersion pipe socket (20) up to a level (53) below the water level (14), and a second elbow (54) is placed on the redirecting pipe (51) and has, adjacent to it, a second immersion pipe socket (55) that is oriented diagonally downward and merges into an aspiration opening (56) that is oriented vertically.

2. Water raising facility according to claim 1, whereby the second elbow (54) is arranged appropriately such that the upper edge (57) of the second elbow (54) is arranged below a minimum water level (14).

3. Water raising facility according to claim 1 or claim 2, whereby the end (52) of the first immersion pipe socket (20), as lower end, is arranged horizontally and the aspiration opening (61) of the second immersion pipe socket (55), which is arranged diagonally downward, is oriented vertically.

4. Water raising facility according to any one of the preceding claims, whereby the redirecting pipe (54) comprises two 90° elbows (58, 59) and one vertical ascending pipe section (60).

5. Water raising facility according to any one of the preceding claims, whereby the second elbow (54) comprises a 90° elbow (61) and an elbow (62) that is angled downwards and merges into the second immersion pipe socket (55) that is oriented diagonally downward.

6. Water raising facility according to any one of the claims 1 to 5, whereby the second immersion pipe socket (55), which is oriented downward, has an angle of inclination (α) of between 30° and 60° with respect to the horizontal line (63).

7. Water raising facility according to claim 6, whereby the second immersion pipe socket (55), which is oriented downward, has an angle of inclination (α) of 45° with respect to the horizontal line (63).

## Revendications

1. Dispositif d'élévation de l'eau composé d'un bassin de purification (37) avec un dispositif de séparation présentant
un tube en forme de U (3) qui est plongé avec sa base (4) dans un liquide à purifier (5) d'un bassin de purification (37) et un premier côté (6) comme tube d'élévation (7) et un deuxième côté (8) comme tube d'aération (9), la base (4) étant conçue comme coude de liaison (10) entre le tube d'élévation (7) et le tube d'aération (9) et les extrémités supérieures (11, 12) des côtés (6, 8) dépassant du liquide à purifier (5) ;
une tubulure d'aspiration qui est disposée sur le tube d'aération (9) dans un niveau d'eau (14) inférieur par rapport à l'eau claire (15) purifiée à élever et
au moins une prise d'air comprimé (16) qui est disposée sur le tube d'élévation (7) et en dessous du niveau d'eau (14) de la tubulure d'aspiration qui passe dans une première tubulure d'immersion (20),
**caractérisé en ce que**
la première tubulure d'immersion (20) passe dans un dispositif de séparation (50), un tube de renvoi (51) du dispositif de séparation (50) étant raccordé à une extrémité (52) de la première tubulure d'immersion (20) et étant dévié à l'opposé de l'orientation de la première tubulure d'immersion (20) jusqu'à un niveau (53) en dessous du niveau d'eau (14) et un deuxième coude (54) étant posé sur le tube de renvoi (51) et auquel est raccordée une deuxième tubulure d'immersion (55) inclinée vers le bas qui passe dans un orifice d'aspiration (56) orienté verticalement.

2. Dispositif d'élévation de l'eau conformément à la revendication n°1, le deuxième coude (54) étant disposé de telle manière à ce que le bord supérieur (57) du deuxième coude (54) soit disposé en dessous d'un niveau d'eau (14) minimum.

3. Dispositif d'élévation de l'eau conformément à la revendication n°1 ou à la revendication n°2, l'extrémité (52) de la première tubulure d'immersion (20) étant disposée à l'horizontale comme extrémité inférieure et l'orifice d'aspiration (61) de la deuxième tubulure d'immersion (55) inclinée vers le bas étant orienté verticalement.

4. Dispositif d'élévation de l'eau conformément à l'une des revendications précédentes, le tube de renvoi (54) présentant deux coudes 90° (58, 59) et une section élévatrice verticale (60) .

5. Dispositif d'élévation de l'eau conformément à l'une des revendications précédentes, le deuxième coude (54) présentant un coude 90° (61) et un coude (62) courbé vers le bas qui passe dans la deuxième tubulure d'immersion (55) inclinée vers le bas.

6. Dispositif d'élévation de l'eau conformément à l'une des revendications n°1 à n°5, la deuxième tubulure d'immersion (55) orientée vers le bas présentant un angle d'inclinaison (α) par rapport à la ligne horizontale (63) entre 30° et 60°.

7. Dispositif d'élévation de l'eau conformément à la revendication n°6, la deuxième tubulure d'immersion (55) orientée vers le bas présentant un angle d'inclinaison (α) par rapport à la ligne horizontale (63) de 45°.
